(19) **Europäisches Patentamt**

**European Patent Office**

**Office européen des brevets**

(11) **EP 1 118 444 B1**

(12) **EUROPEAN PATENT SPECIFICATION**

(45) Date of publication and mention
of the grant of the patent:
**12.05.2004  Bulletin 2004/20**

(51) Int Cl.$^7$: **B29C 35/04**, B29C 35/16

(21) Application number: **00810056.2**

(22) Date of filing: **21.01.2000**

(54) **High rate moulding process**

Formverfahren mit hoher Leistung

Procédé de moulage à grande capacité

(84) Designated Contracting States:
**AT BE CH CY DE DK ES FI FR GB GR IE IT LI LU
MC NL PT SE**

(43) Date of publication of application:
**25.07.2001  Bulletin 2001/30**

(73) Proprietor: **ECOLE POLYTECHNIQUE FEDERALE
DE LAUSANNE
1015 Lausanne (CH)**

(72) Inventors:
• **Weibel, Nicolas Denis
1006 Lausanne (CH)**
• **Wakeman, Martyn Douglas
1004 Lausanne (CH)**
• **Vuilliomenet, Pascal
1006 Lausanne (CH)**

• **Manson, Jan-Anders Edvin
1605 Chexbres (CH)**

(74) Representative: **Ganguillet, Cyril et al
ABREMA
Agence Brevets & Marques
Ganguillet & Humphrey
Avenue du Théâtre 16
Case postale 2065
1002 Lausanne (CH)**

(56) References cited:
DE-A- 1 770 530        DE-A- 19 612 210
FR-A- 2 110 337        FR-A- 2 179 473
GB-A- 987 724          US-A- 3 619 317
US-A- 3 829 547        US-A- 5 051 226

**Description**

The present invention concerns a process for moulding a piece, wherein a mouldable material is introduced into a mould, the mould is heated up at least to a temperature at which said material may be moulded, the mould is cooled down and said piece is stripped from the mould.

There is currently much activity aimed at the development of processing techniques for cost effective production of complex shaped pieces from fiber reinforced composites. The use of thermoplastic resins as matrices for fiber reinforced composites leads to high fracture toughness and elongation at break, relatively short processing cycle times, a long shelf life of raw materials, repairability and recyclability. However, the commercial use of thermoplastic composites has been limited, due to high viscosities during processing, which makes impregnation of the reinforcing fiber network relatively slow and thereby leads to long processing cycle times. Processing cycle time is defined as the time required to heat, to impregnate the reinforcing fibers, to consolidate and to cool the composite thereafter. Indeed, the viscosities of molten thermoplastics are about 100 Pas to 5'000 Pas, which is very high, in comparision to the viscosities below 10 Pas for thermosets. The direct melt impregnation is problematic, due to these high viscosities. Processes involving reactive chain extension after impregnation can be time consumming, due to the chemical reactions involved.

US 5,051,226 discloses a method for curing fibre reinforced resin matrix composite materials, wherein the uncured composite material is positioned on a plaster form substantially into the desired shape. The material is then cured by immersing it together with the form into a fluid heating bath for a predetermined time, which is sufficient to provide resin flow prior to hardening and curing the composite material. While the material is immersed in the bath, it is compressed by the ambient pressure.

Several authors have proposed manufacturing routes based on various preforms developped for intimate mixing of constituents prior to melting and in-situ impregnation of reinforcing fibers upon melting of a thermoplastic resin.

US 5,910,361 (to Guevel et al.) discloses a hybrid yarn made up of an intimate mixture of spun yarns of reinforcing fibers and spun yarns of thermoplastic matrix fibers. The spun yarns are obtained by cracking of the multifilaments with gradual stretching. After stretching, parallel fibers are wrapped with a continuous thermoplastic filament.

The inventors used braided textile preforms based on such stretch-broken commingled or hybrid yarns to minimize shear deformation and wrinkling during a bladder inflation moulding process (BIM). Hollow pieces with varying cross section and concave and convex sharp angles were successfully produced (N.D. Weibel et al., Proceeding of the 20th International SAMPE conference, Apr. 13-15, 1999). When using the hot press heating method and an aluminium mould machined with minimal mass, it was possible to achieve heating rates of 1.3 °C/sec, thus processing cycle times of approximatively 3 minutes.

To be competitive in high volume industries, composite materials must be processed cost effectively so as to approach similar cycle times as traditional materials such as metals. It is thus a primary aim of the invention to further improve a moulding process as above described, to process hollow complex shaped thermoplastic composite parts, often in less than 1 minute.

It appeared to the inventors that the impregnation phase may require less than 30 seconds, and even less than 10 seconds, depending upon pressure and temperature, and part thickness and that the limiting factors of this technique are the heating and cooling rates, as far as the processing time is concerned. Thus, to overcome the limits set forth above, a new heating method was developed. In the process according to the invention, a mould is heated by immersion into a liquid heating bath, which is maintained at a temperature above the lowest temperature at which the material may be moulded.

Preferably, the liquid heating bath is maintained at a temperature which is 20°-150°C above the usual processing temperature range of the mouldable material. The temperature of the heating bath is selected considering in particular the thermal stability of the constituents of the mouldable material and the need to reduce the viscosity during processing.

The heating method according to the invention is based on liquid conductive and convective heat transfer, rather than solid conduction.

The cooling rate may be increased by cooling the mould by quenching in a liquid quenching bath.

Since the heat transfer is due to the contact of the mould with a liquid, it is not necessary to machine the outer surface of the mould for close contact with a corresponding surface of a heating plate. The mould may be thin walled so as to improve the heat transfer rate.

In a variant of the process to further improve the heat transfer without reaching excessive temperatures within the mould, after the immersion in the heating bath and before the quenching, the mould can be allowed to thermally equilibrate outside of the baths.

According to a preferred embodiment of the invention, the liquid heating bath is a bath of a molten metal which is thermally and chemically stable and provides excellent heat transfer.

According to a particularly preferred embodiment, the liquid that was selected to heat the mould is pure tin. Tin(Sn) has a melting point of 232 °C and a density of 7.3 g/cm$^3$. It is non-toxic and has a high surface tension so as to reduce the wetting of the mould surface. The relatively high density of tin provides a high heat content of the medium (240 J.kg$^{-1}$K$^{-1}$). Tin has a relatively high conductivity of 30.2 W.m$^{-1}$· K$^{-1}$ for liquid tin at its melting point and 59.6 W.m$^{-1}$·K$^{-1}$ for solid tin at the same temperature. Thus, the combined effect of convection and conductivity provides an excellent heat transfer. Tin vapours at 300°C are produced at an extremely low rate of 10$^{-21}$ kg m$^{-2}$sec$^{-1}$ and its saturation pressure is of 1.3x10$^{-14}$ Pa. Thus the safety of workers around such a heating unit is ensured.

Those skilled in the art will appreciate that the process according to the invention may be applied to the moulding of pieces in any mouldable thermoplastic or thermosetting material. It is most advantageous for processing hollow complex shaped pieces of composite materials and especially of thermoplastic composite materials.

The heating method according to the invention is suitable for heating moulds of any shape and size. Thin walled moulds are preferred. Particularly preferred is the association of a liquid heating bath and a BIM process.

Materials forms that combine either or both discontinuous and continuous random fibres with a thermoplastic matrix material with different reinforcing fibre architectures including both random and different degrees of reinforcing fibre alignment may be considered firstly for this heating process and secondly for this moulding process. Suitable arrangements of materials with a suitable mingling quality of reinforcement and matrix that may be used with first this heating process and secondly this moulding process include tows or yarns, tapes, braids, weaves, knits, fabrics and other textile processes suitable for manipulating or combining mingled reinforcing fibre and matrix. Materials may be used in either or both an unconsolidated state, a partially consolidated state or a fully consolidated state where the material becomes flexible for the moulding process when the combination of matrix and reinforcing fibre material is heated using this invention to a forming temperature.

Techniques for combining reinforcing fibers and thermoplastic matrix materials, in both continuous and discontinuous fiber lengths, which are applicable for heating with this invention include: melt impregnation, film stacking, solvent impregnation, commingling, powder impregnating using both aqueous slurries and electrostatic methods of coating, powder impregnated fibres with an unmelted sheath around the powder impregnated bundle for textile processing, standard fabrics impregnated by powder to form a semi-finished product, the utilization of existing textile processing techniques applied to the warp knitting of split polymer films with weft insertion of reinforcement fibers, weft-inserted multi-axial warp knitting of reinforcing fibers and thermoplastic matrix ribbons, co-weaving yarns of the two fibers into a form possessing good drape characteristics, using a polymer fiber woven around a bundle of reinforcement fibers in the plied matrix technique, reinforcing and matrix yarns inter-dispersed on line during fabric formation to produce drapable stitch bonded fabrics, heating of fibres impregnated with monomers that polymerize in-situ to form the composite, wire coating processes adapted to coating reinforcing fibres or bundles of fibres with matrix, pultrusion of fibres and matrix materials together and any other such process that achieves the required combination of fibre and matrix in a form between fully consolidated and unconsolidated forms.

Commingled materials, which are the preferred material for this moulding process, can be formed either directly as in patents US 5011523 and US5316561 where the reinforcing fibers are drawn from the molten state through a die where the reinforcing glass fibers are combined with a drawing head where the thermoplastic matrix is extruded and drawn mechanically onto the glass fibers or indirectly by separating fibre and matrix fibre yarns (US 5241731) into open ribbons where the matrix fibres are electrically charged and then drawn into a flat open bundle via a ribboning bar to the commingling bar where the Carbon fiber yarn is opened with an air curtain into an open flat ribbon that is then combined with the PEEK (Poly-ether-ether-ketone) ribbon at the commingling bar or in the example shown herein of the material used to illustrate this invention where stretch broken Carbon fibers (80mm average length) are blended with PA12 staple fibers using a textile spinning technique (US 4825635). with the addition of a wrapping filament (US 5910361).

Other features and advantages of the invention will appear to those skilled in the art from the detailed description of materials and moulds suitable for performing the invention and of examples of application in connection with the figures, wherein:

- fig. 1 shows examples of composite preforms, discussed above, known in the art.
- fig. 2 is a schematic view of a BIM device known in the art.
- fig. 3 is a schematic view of a tin bath.
- fig. 4a is a stainless steel mould used to perform the invention.
- fig. 4b is an aluminium mould used to perform the invention.
- fig. 5a is a diagram comparing cycle times of BIM parts processed with different heating units.
- fig. 5b is a diagram comparing cycle times of BIM parts processed with different heating units.
- fig. 6 is a schematic view of the stretching/breaking step of reinforcing fibers.
- fig. 7 is a schematic view of the mingling of tows
- fig. 8 is a schematic view of a braiding step of a preform used to produce tubular parts.
- fig. 9 is a diagramm exhibiting evolution of void content with consolidation time for different temperature and pressure conditions.

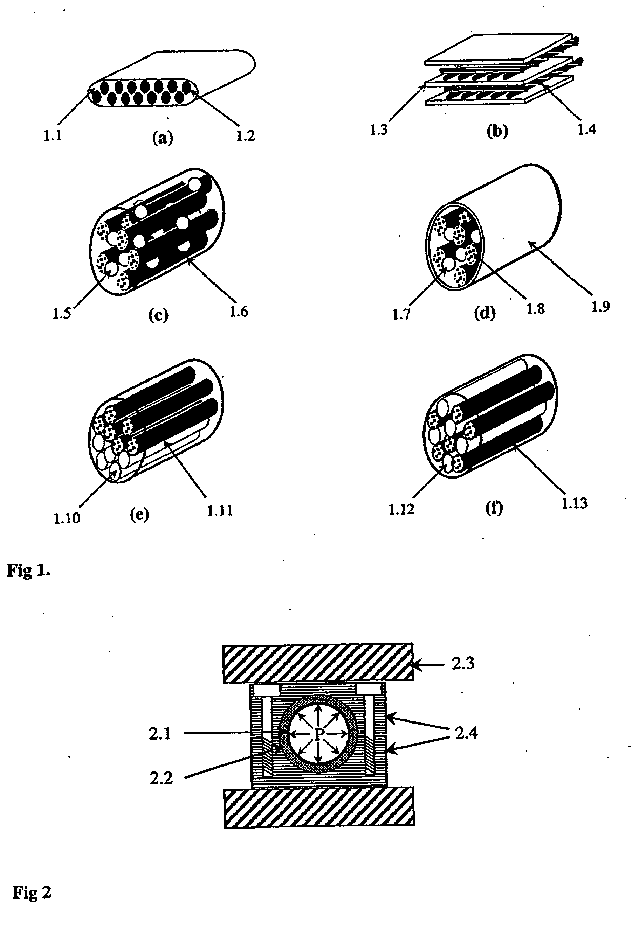

Figure 1 illustrates several types of preforms of thermoplastic composites known in the art:

(a) is a preimpregnated tow, in which 1.1 is a thermoplastic matrix sheet surrounding reinforcing fibers 1.2;
(b) is a film stacking preform in which thermoplastic films 1.3 alternate with reinforcing fiber fabrics 1.4;
(c) is a reinforcing fiber 1.6 bundle impregnated with thermoplastic powder 1.5;
(d) shows a fiber 1.8 bundle impregnated with thermoplastic powder 1.7 and surrounded by a thermoplastic sheet 1.9;
(e) shows a non-commingled yarn of thermoplastic fibers 1.10 and reinforcing fibers 1.11;
(f) shows a commingled yarn of thermoplastic fibers 1.12 and reinforcing fibers 1.13.

Basing on Darcy's law, it may be shown that the impregnation time $t_{imp}$ is given approximately by the relation

$$t_{imp} \cong (\eta x^2 / kP)$$

where $\eta$ is the viscosity of the resin, x is the distance the resin must flow, k the permebility and P the pressure. The flow distance x derives directly from the geometry of the preform.

Preforms based on yarns (c), (d) and (f) are expected to exhibit short impregnation times. With powder impregnated fibers, as shown in figures 1 (c), and 1 (d), the main advantage is that almost any matrix material can be produced in form of particles by grinding. On the other hand, diffusion distances are greater than for commingled yarns as shown in figure 1 (f). Therefore, minimum impregnation times are deemed to be reached with commingled yarns.

The commingled yarn can be woven or braided into various desired shapes, sheets, tubes, and the like.

To produce hollow shapes out of fiber reinforced composites, it is convenient to use a bladder pressurised with air. When the preform made out of stretch-mingled yarn is woven or braided either as a tuve or to the approximate shape of the part, a polymeric material or a silicon rubber baloon or hose, the so called bladder, is placed inside the preform prior to its deposition in the mould. The mould is machined to the exact shape of the part, to avoid most post machining of the part after stripping the part from the mould.

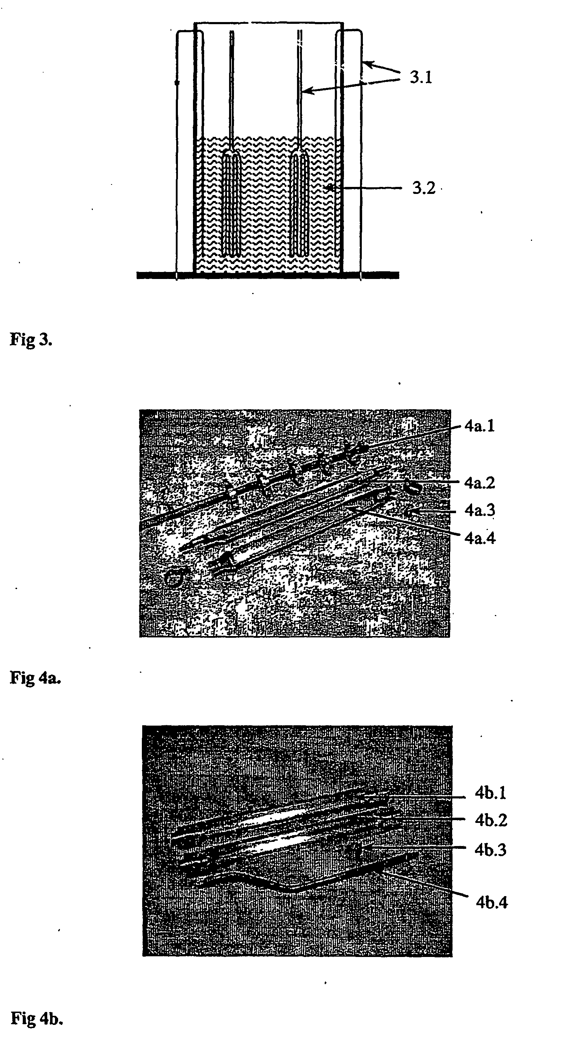

Figure 4a shows a mould made of stainless steel in order to reduce the wall thickness to 2.5 mm and still resist an inside pressure of 10 bars. The photograph shows a half shell 4a.4 of the mould, the closing system 4a.1, the bladder 4a.2, which is placed inside the mould and a pressure lock 4a.3.

Figure 4b shows a mould made out aluminium to assure a rapid heat transfer accross the mould, and a wall thickness of 10 mm in order to improve tightness of the closed mould. The mould consists of two half shells 4b.1 with holes 4b.2 along the length of the half shells for bolted closing of the system. A metallic pressure hose 4b.4 may be placed into the mould, which is provided with a pressure lock 4b.3.

Figure 3 is a schematic view of a tin bath, filled with liquid tin 3.2 and provided with heating elements 3,1, dipped into the tin.

Example 1: Production of a commingled yarn

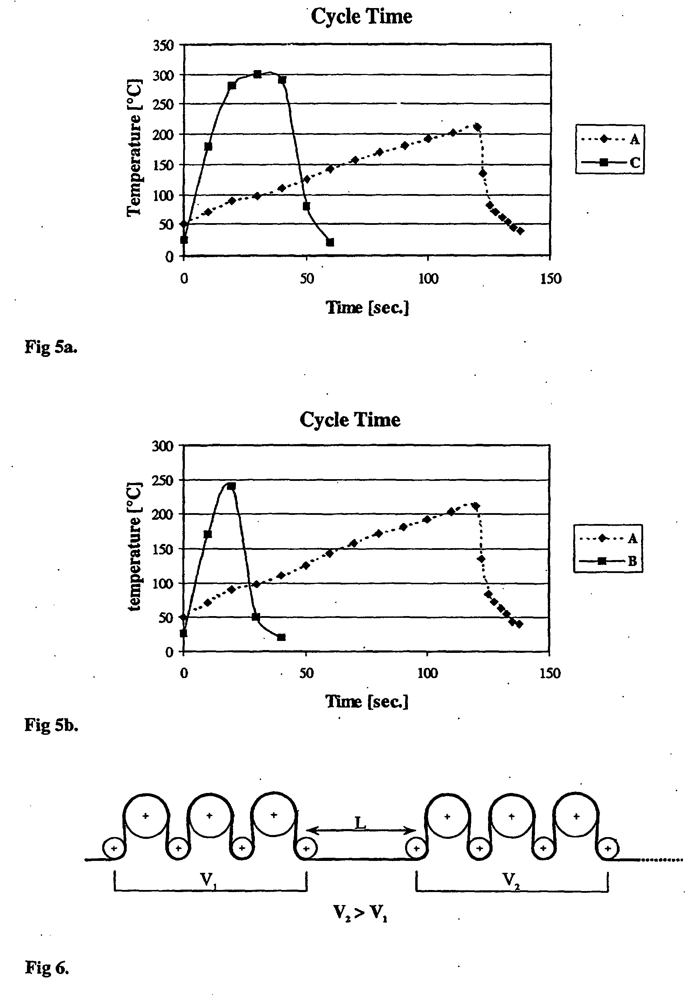

A commingled yarn of carbon fibers (TENAX HTA 5411) and polyamide 12 fibers (EMS Chemie) was prepared with 56% volume carbon fibers. To ensure intimate mingling of the constituents, a process similar to that disclosed by US 5,910,361 was used. In a first step, the carbon tow is stretched and broken as schematically illustrated by Figure 6; according to the tangential speed difference between the two groups of rolls (V1 vs. V2) and the distance L, the fiber length distribution can be controlled. After this operation, the fibers are still aligned and most of their defaults are eliminated by rupture at their weakest points. The matrix fibers are also prepared in the same way.

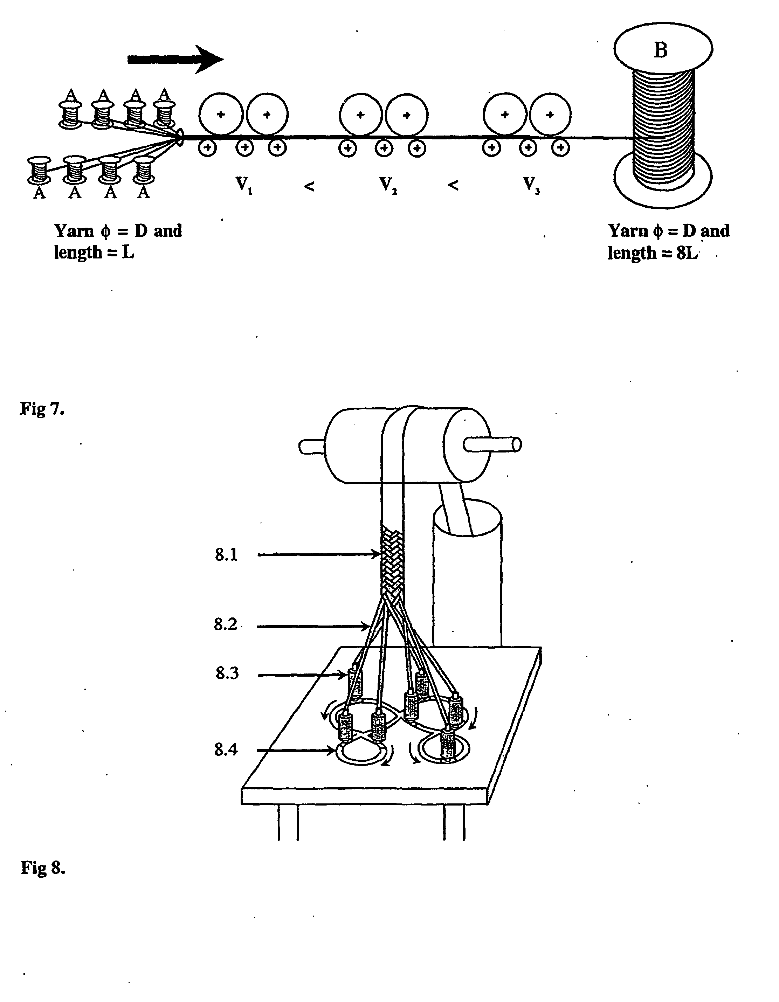

In a second step, both constituents are brought together in the desired weight fraction to form a mingled tow, as illustrated in fig. 7. Eight un-mingled tows with tow diameter D and length L are brought together from eight bobins and stretched by a factor of eight. This gives a tow of equal diameter D than the un-mingled tows, but of length 8 L and eight times mingled. This step is repeated two times in order to obtain finally a 64 time mingling ratio, the so-called commingled or stretch-mingled or hybrid tow.

In a final step, the commingled tow is formed into a commingled yarn, using a matrix fiber thread twisted around the tow.

Thereafter, the commingled yarn can be woven or braided into a desired preform shape.

Example 2: Forming of a composite tube by BIM technique with solid conductive heating

The commingled yarn 8.2 of Example 1 is braided into a tubular shaped preform 8.1, with braiding angles of $\pm 20°$, from bobins 8.3, as illustrated (8.4) by fig. 8. Two layers of the preform are placed around a bladder and then set into a mould of the type illustrated by fig. 2.

For this technique, the mould is made out of 2 aluminium halves 2.4, screwed together, to ensure good heat conduction while withstanding up to 12 bars of internal pressure. The pressure P is applied through the bladder 2.1, a silicon rubber tube, which is extensible enough to reach the inside surface of the mould and which resists the processing temperature. The commingled yarn braided in a tube-like shape 2.2 is placed around the bladder and then set into the mould. The mould is closed and the bladder pressurized. The dimension of the braided preform 2.2 is 25 mm and the inner dimension of the mould is 30 mm. The inside pressure P is applied through the silicon rubber tube of the bladder 2.1. The preform 2.2 therefore stretches up to the moulds in a surface as soon as the pressure is applied in the bladder. This allows avoiding wrinkles and producing a uniform wall thickness of the piece. The mould is then placed and pressed between two hot plates 2.3 at 400°C to accelerate heat transfer to the mould, and thereby heated up for melting the thermoplastic resin. After a few minutes, as soon as the thermoplastic melt has flown around the fibers and made a continuous phase, the mould is extracted from between the heating plates and quenched with water. Within seconds, the piece can be stripped from the mould.

It has been shown (N. Bernet et al., J. of composite materials, 33, 8, 1999) that the void content is a representative parameter of achievement of consolidation of the moulded part.

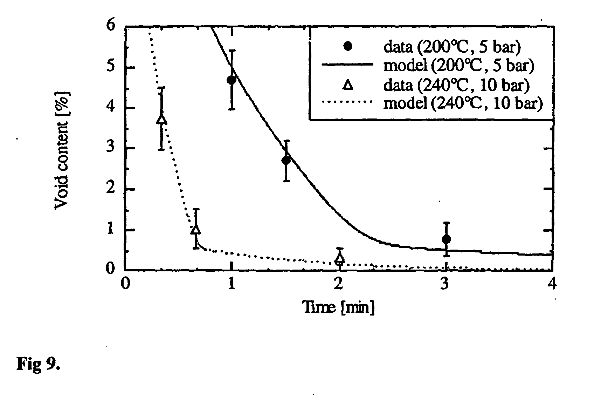

Figure 9 shows the evolution of the measured void content (using ASTM D-792) performed on the braided PA 12/carbon fibers commingled yarn consolidated after processing at different temperature and pressure conditions, at 200°C and 5 bars and 240°C and 10 bars respectively. These results show that it is possible to reach a void content of less than 1%, that is to say a workpiece with good mechanical properties, within consolidation times of less than respectively 2 minutes and 40 seconds, at relatively low processing temperatures and pressures.

In figures 5a and 5b, curve (A) shows the evolution of the temperature at the inside wall of the mould versus time. Since the melting point of polyamide 12 is 178°C, curve A shows that the impregnation phase itself requires less than 30 seconds.

These results show that complex shaped parts may be successfully produced with processing cycle times of less than 3 minutes.

It appears also from these results that the limiting factor for high rate production in cycle times of less than one minute is the heating rate.

Example 3: Bladder inflation moulding with liquid convective heating; stainless steel mould

The raw composite material and the bladder are the same as in examples 1 and 2.

The mould, with the same inner dimension as in example 2 is made out of two stainless steel half shells in order to reduce the wall thickness to 2.5 mm and still resist an inside pressure of at least 10 bars. Fig. 4 shows a photograph of a half shell, the bladder and the closing system of the mould.

The heating is based on liquid convective heat transfer, by the immersion of the closed stainless steel mould into liquid tin heated at 325 °C, for 15 seconds.

The measure of the temperature is performed by means of a thermocouple placed against the inside of the mould and shown by curve C of fig. 5a.

For achieving the heat transfer, the mould is taken out of the tin bath after 15 seconds. No liquid tin sticks to the outer surface of the mould. At that moment, the inner surface of the mould is at 250°C and the outside surface at 325°C. The mould is kept in ambient atmosphere during 25 seconds. 40 seconds after the beginning of the processing cycle, the mould reaches an equilibrium temperature of about 300°C. Cooling is then performed in another 15 seconds by immersion in a water bath. The consolidation time is 25 seconds for this cycle, as shown in fig. 5a, curve C.

Thus, the whole procesing cycle time is about 60-65 seconds.

Those skilled in the art will especially notice that the melting temperature of PA 12 is reached at the inner surface of the thin walled stainless mould heated by a tin bath at 325° C within about 10 seconds, whereas the same temperature is obtained inside the aluminium mould heated by heating plates at 400° C in about 90 seconds.

Example 4: Bladder inflation moulding with liquid convective heating; aluminium mould

The raw composite material and the bladder are the same as in examples 1 and 2.

The mould, with the same inner dimension as in example 2 is made out of two aluminium half shells in order to reduce the wall thickness to 10 mm and still resist an inside pressure of at least 10 bars, is the mould shown on Fig. 4b.

The heating is also based on liquid convective heat transfer, by the immersion of the closed aluminium mould into liquid tin heated at 300 °C, for 10 seconds. The measure of the temperature is performed by means of a thermocouple placed against the inside of the mould and shown by curve B of fig. 5b.

For achieving the heat transfer, the mould is taken out of the tin bath after 10 seconds. No liquid tin sticks to the outer surface of the mould. At that moment, the inner surface of the mould is at 170°C and the outside surface at 300°C. The mould is kept in ambient atmosphere during 10 seconds. 20 seconds after the beginning of the processing cycle, the mould reaches an equilibrium temperature of about 235°C. Cooling is then performed in another 15 seconds by immersion in a water bath. The consolidation time is 10 seconds for this cycle, as shown in fig. 5b, curve B.

Thus, the whole procesing cycle time is about 35 seconds.

Of course other processing parameters are selected when other polymetic materials than PA 12 are processed or when other parts and/or mould geometries are used.

## Claims

1. A process for moulding a piece, wherein a mouldable material is introduced into a mould (4.4, 5.1), the mould is heated up at least to a temperature at which said material is mouldable, the mould is cooled down and said piece is removed from the mould, **characterised in that** said mouldable material is placed on a bladder, said bladder and said mouldable material are introduced into said mould, and **in that** moulding is performed by a bladder inflation moulding process, wherein the mould is heated by immersion into a liquid bath (3, 2) maintained at a temperature higher than the lowest temperature at which the material is mouldable.

2. A process according to claim 1, **characterised in that** the mould (4.4, 5.1) is cooled down by quenching in a liquid quenching bath and **in that** between the immersion in the heating bath and the quenching bath, the mould is allowed to reach thermal equilibrium outside of said baths.

3. A process according to claims 1 or 2, **characterised in that** the heating bath contains a liquid metal.

4. A process according to claim 3, **characterised in that** said metal is tin.

5. A process as claimed in anyone of the preceding claims, **characterised in that** said mould is a thin-walled metallic mould, the thickness of the walls being selected so as to resist to the inside pressure of the pressurised bladder.

6. Application of a process according to anyone of claims 1 to 5 to moulding pieces made of composite materials.

7. Application according to claim 6, **characterised in that** the composite material comprises a thermoplastic resin and reinforcing fibers.

8. Application according to claim 7, **characterised in that** the material is structured into commingled yarns of thermoplastic fibers and reinforcing fibers.

## Patentansprüche

1. Ein Verfahren zum Formen eines Teiles, in dem ein formbarer Werkstoff in eine Form (4.4, 5.1) eingeführt wird, die Form wenigstens bis auf eine Temperatur, bei der der Werkstoff formbar ist, aufgeheizt wird, die Form abgekühlt wird und das genannte Teil der Form entnommen wird, **dadurch gekennzeichnet, dass** der formbare Werkstoff auf eine Blase angeordnet wird, dass die Blase und der formbare Werkstoff in die Form eingeführt werden, und dass das Formen gemäss einem Formverfahren mit aufblasbarer Blase ausgeführt wird, wobei die Form durch eintauchen in ein flüssiges Bad (3, 2), das bei einer Temperatur, welche höher ist als die tiefste Temperatur bei der der Werkstoff formbar ist, gehalten wird, aufgeheizt wird.

2. Verfahren gemäss Anspruch 1, **dadurch gekennzeichnet, dass** die Form (4.4, 5.1) durch abschrekken in einem flüssigen Abschreckbad abgekühlt wird, und dass zwischen dem Eintauchen in das Heizbad und in das Abschreckbad man die Form das thermische Gleichgewicht ausserhalb der Bäder erreichen lässt.

3. Verfahren gemäss Anspruch 1 oder 2, **dadurch gekennzeichnet, dass** das Heizbad ein flüssiges Metall enthält.

4. Verfahren gemäss Anspruch 3, **dadurch gekennzeichnet, dass** das Metall Zinn ist.

5. Verfahren gemäss irgendeinem der vorigen Ansprüche, **dadurch gekennzeichnet, dass** die Form eine dünnwandige Metallform ist, wobei die Dicke der Wände so ausgewählt wird, dass sie dem inneren Druck der sich unter Druck befindenden Blase standhalten.

6. Anwendung eines Verfahrens gemäss irgendeinem der Ansprüche 1 bis 5 zum Formen von Verbundwerkstoffen.

7. Anwendung gemäss Anspruch 6, **dadurch gekennzeichnet, dass** der Verbundwerkstoff ein thermoplastisches Harz und Verstärkungsfasern einbegreift.

8. Anwendung gemäss Anspruch 7, **dadurch gekennzeichnet, dass** der Werkstoff zu gemischten Fäden aus thermoplastischen Fasern und Verstärkungsfasern strukturiert ist.

## Revendications

1. Un procédé pour mouler une pièce, dans lequel un matériau moulable est introduit dans un moule (4.4, 5.1), le moule est chauffé au moins jusqu'à une température à laquelle ledit matériau est moulable, le moule est refroidi et ladite pièce est retirée du moule, **caractérisé en ce que** ledit matériau moulable est placé sur une chambre à air, que ladite chambre à air et ledit matériau moulable sont introduits dans ledit moule, et **en ce que** le moulage est effectué par un procédé de moulage avec gonflage de chambre à air, dans lequel le moule est chauffé par immersion dans un bain liquide (3, 2) maintenu à une température supérieure à la plus basse température à laquelle le matériau est moulable.

2. Un procédé selon la revendication 1, **caractérisé en ce que** le moule (4.4, 5.1) est refroidi par trempe dans un bain liquide de trempe et **en ce que** entre l'immersion dans le bain de chauffe et le bain de trempe, on laisse le moule atteindre l'équilibre thermique à l'extérieur desdits bains.

3. Un procédé selon la revendication 1 ou 2, **caractérisé en ce que** le bain de chauffe contient un métal liquide.

4. Un procédé selon la revendication 3, **caractérisé en ce que** ledit métal est de l'étain.

5. Un procédé selon l'une quelconque des revendications précédentes, **caractérisé en ce que** ledit moule est un moule métallique à parois fines, l'épaisseur des parois étant choisie de façon à résister à la pression intérieure de la chambre à air sous pression.

6. Application d'un procédé selon l'une quelconque des revendications 1 à 5 au moulage de pièces faites de matériaux composites.

7. Application selon la revendication 6, **caractérisée en ce que** le matériau composite comprend une résine thermoplastique et des fibres de renfort.

8. Application selon la revendication 7, **caractérisée en ce que** le matériau est structuré en fils entremêlés de fibres thermoplastiques et de fibres de renfort.

1.1    (a)    1.2

1.3    (b)    1.4

1.5    (c)    1.6

1.7    (d)    1.8    1.9

1.10    (e)    1.11

1.12    (f)    1.13

**Fig 1.**

2.3

2.1    P    2.4

2.2

**Fig 2**

Fig 3.

Fig 4a.

Fig 4b.

## Cycle Time

Fig 5a.

## Cycle Time

Fig 5b.

$V_2 > V_1$

Fig 6.

**V₁**    **<**    **V₂**    **<**    **V₃**

Yarn $\phi$ = D and
length = L

Yarn $\phi$ = D and
length = 8L

**Fig 7.**

8.1

8.2

8.3

8.4

**Fig 8.**

**Fig 9.**